# EUROPEAN PATENT SPECIFICATION

(11) **EP 3 354 140 B1**
(45) Date of publication and mention of the grant of the patent: **18.08.2021**
(21) Application number: 18153899.2
(22) Date of filing: 29.01.2018
(51) Int. Cl.: A23L 2/02, A23L 2/52, A23L 2/54

(54) **PROCESS FOR MANUFACTURE OF A HEALTH-PROMOTING FRUIT ENERGY DRINK**
VERFAHREN ZUR HERSTELLUNG EINES GESUNDHEITSFÖRDERNDEN FRUCHTENERGIEGETRÄNKES
PROCÉDÉ DE PRÉPARATION D'UNE BOISSON ÉNERGISANTE À BASE DE FRUITS PROMOUVANT LA SANTÉ

(30) Priority: 30.01.2017 PL 42035817
(43) Date of publication of application: 01.08.2018
(73) Proprietor: La-Sad Trade sp. z o.o., 05-620 Bledow (PL)
(72) Inventor: LACHOWICZ, Michal, 05-620 Bledów (PL); STANISZEWSKI, Zbigniew, 01-058 Warszawa (PL)
(74) Representative: Wazynska, Miroslawa

(56) References cited:
- EP-A1- 0 587 972
- DE-A1-102005 006 241
- DE-A1-102009 044 296
- DE-U1- 20 312 929
- US-A1- 2002 054 946
- US-A1- 2004 018 275
- John Garton: "Jenni Liddiard's Sparkling Cloudy Apple Juice", Genuine Jersey Blog , 1 January 2014 (2014-01-01), XP002779974, Retrieved from the Internet: URL:http://www.genuinejersey.com/blog/jenn i-liddiards-sparkling-cloudy-apple-juice/ [retrieved on 2018-04-12]
- Anonymous: "Sparkling Apple Juice", The Apple Farm , 23 April 2009 (2009-04-23), XP002779975, Retrieved from the Internet: URL:https://web.archive.org/web/2009042304 3028/http://www.theapplefarm.com/sparkling juice.htm [retrieved on 2018-04-12]
- DATABASE GNPD [Online] MINTEL; 18 July 2016 (2016-07-18), anonymous: "Orange Juice with Caffeine", XP55767476, Database accession no. 3372345

## Description

The object of the invention is a process for manufacture of health-promoting fruit energy drink.

Known energy drinks are composed of a number of isolated substances, including stimulating, bioactive, flavouring, preservative ones, which are soluble in water.

In everyday life, the terms "juice" and "drink" are often used interchangeably and may be understood differently.

The description of the invention will use the nomenclature which is legally valid in Poland and in the European Union.

Juice. 100% fruit juice is to be understood as juice to which no additives have been added (except for the allowed ones). Each juice has a 100-percent "fruit" or "vegetable" feed, since all allowed additives are dispensed when necessary in such amounts and in such a manner so as to not allow the dilution of juice (vitamins C, E, beta-carotene, calcium, potassium, magnesium). NFC juices (Not From Concentrate) are obtained directly from fresh fruits.

Drink. The term is used ambiguously in common parlance, in trade and in law. The regulations of Poland and the European Union use this term to define all non-alcoholic drinks produced on the basis of juices (comprising fruit juice) and comprising additives which are forbidden during the production of juices and nectars.

*(*Regulation of the Ministry of Agriculture and Rural Development dated 30 September 2003 on specific requirements involving commercial quality of juices and nectars (Journal of Laws 2014 item 494*))*
PL189689 B discloses a regenerating energy drink, characterised in that it comprises 1.0-16.0% by weight of sugar, 2.0-15.0% by weight of concentrated natural fruit juices, 3.0-15.0% by weight of supplements forming high-energy compounds participating in intracellular transformations, including glutamine, carnitine, taurine, 0,2-4.0% by weight of guarana, 0.05-2.0% by weight of malic or citric acid as an acidity regulator, 0.05-0,2% by weight of pure caffeine, 0.5-1.5% by weight of taurine, and also vitamins from the B group. Moreover, the regenerating energy drink may comprise up to 5.0% by weight of tea extract, and also vitamins A, C, E and β-carotene.

DE 10 2009 044 296 A1 relates to another product which contains no natural apple juice whatsoever, and only an apple concentrate which lacks the majority of preferable components contained in naturally pressed juice. This solution provides only 5-60 liters of concentrate per 100 liters of the drink. The concentration (densification) of juice proceeds in devices called evaporators. The juice is warmed up in special columns in order to evaporate water from it. Most often, the juice is densified from 15% to 70%. The high sugar content of concentrated juice acts as a preservative and allows a long storage period. However, a long thermal process destroys numerous compounds, including vitamins. Additionally, evaporating devices may not evaporate natural juice, since it comprises pectins and solid particles, which would adversely affect the operation of the installation in evaporators. The juice is technologically freed of pectins and micro-filtration frees the juice of any solid elements (thus the perfect clarity of juices available in shops, which however is not an advantage thereof, but a disadvantage, indeed). During heat processes, the juice is also freed of natural flavours, since they are the first to evaporate. In here, one of the additives is an apple flavour, which must replace natural flavours. On the other hand, very high sugar content adversely affects the body in such an amount. Brilliant blue E133 may act allergically.

The "energy" flavour (without indicating a specific scent) are completely synthetic, artificial substances, not having anything in common with natural flavours.

Replacing technological water with mineral water, and sugar - with a chemical sweetener does not improve the value of the drink, and it additionally increases the share of artificial chemical substances in it.

Although this product is produced from an apple concentrate made from apples, it has such disadvantages that it cannot be considered a healthy and natural drink like the one according to the invention.

WO 2005/018344 is based on natural apple juice. It is artificially vitaminised and enriched with synthetic glucuronolacton, which is harmful for health. This product is not carbonated, and thus according to the law it cannot be considered a drink and it should be classified as juice with additives.

Numerous directives of the European Union which are in effect now were not in effect on the date of the international application in the year 2004. In the light of regulations which are valid now, such a drink in such a form cannot be produced at all. One can only presume that this drink was called an "energy drink", although its composition does not constitute a drink but "juice". Only with such a definition of the product of WO 2005/018344 are its components allowed. By classifying the product knowingly or unknowingly as an "energy drink", the applicant disregarded a number of European Union regulations.

In the context of WO 2005/018344, once again the differences in the definition of *"juice"* and *"drink'* should be indicated for food products permitted for introduction into the EU market.

The contradictions in nomenclature are regulated by, e.g.:
The guidelines of the British Food Standard Agency called "The Criteria of Using the Terms fresh, clean, natural etc." in labelling food, hereinafter: the FSA guidelines. Because the *"drink"* is noncarbonated, therefore, it should be considered as *'juice",* and according to the regulations in effect it cannot be supplemented with non-mineral substances. Therefore, additives like caffeine are forbidden in such a case.

A similar case involves glucuronolacton as a detoxifying and stimulating substance. It is a compound naturally present in human body, but as a synthetic introduced in excess into the product is causes immense damage. The fact is that under the conditions of normal body operation, in these amounts it facilitates the removal of toxins and acts stimulatingly, but its increased doses are very dangerous for human. In some countries it is almost considered a designer drug.

"This substance was created by the United States Department of Defense. It was intended for American soldiers in Vietnam to help fight stress. Its action is highly hallucinogenic, so its action is similar to some narcotics. However, in US Army it was quickly concluded that it is a very dangerous poison, which may be the cause of brain tumours and liver diseases. The fact that today it can be found in some energy drinks may be worrying... (vide: Vereine für Unabhängige Gesundheitsberatung UGU - Switzerland)"

"Glucuronolacton is added to various preparations in order to support detoxification (detoxicating) of the body of harmful xenobiotics (substances of foreign origin, not present naturally in the body). Theoretically, it should be the source of glucuronic acid, which is important in the processes of disposal and excretion of harmful products of metabolism and xenobiotics.

In Germany this substance is forbidden by law (vide: Vereine für Unabhängige Gesundheitsberatung UGU - Switzerland)..." because it "...accelerates the excretion of harmful substances of metabolism from the body. Too high amounts thereof act hallucinogenically like a narcotic. It may cause headaches and result in liver diseases..." Although the European Food Safety Authority (EFSA) allowed the agent for use in energy drinks, it cannot be used in Germany. In here, the Germans refer in particular to:
Commission Regulation (EU) No 432/2012 of 16 May 2012, establishing a list of permitted health claims made on foods, other than those referring to the reduction of disease risk and to children's development and health (OJ EU.L.2012.136.1), hereinafter regulation 432/2012).

From US2004018275 A there is a known carbonated energy drink, comprising 4-25% of Dextrorotation -saccharide, approximately 30% of at least one concentrate selected from the group of tea, coffee, fruit, vegetable concentrates, a mixture comprising at least 10% of the recommended daily consumption of vitamins of the B-complex group, diluted in water, with a degree of carbon dioxide saturation not exceeding approx. 5.4 g CO₂ per 1 liter of the drink. A sample composition of the drink (in percent by weight) comprises 6.5-7.5% of dextrose, 1-2% of raspberry concentrate, 3-4% of corn syrup with a high fructose content, 0.05-0.08% of citric acid, 0.05-0.15 of malic acid, 0.3-0.6 of blackberry concentrate, 0.1-0.2% of blueberry flavour, 0.025-0.04% of ascorbic acid, 0.005-0.008% of a B-complex vitamin mixture, 2-3% of pear juice concentrate, 0.08-0.12% of preservatives, water complementing to 100%, carbon dioxide in an amount of 1.8 grams per liter of the drink.

Carbohydrates are the primary energy source for human body. The rate of transforming carbohydrates into energy depends on the easiness of their absorption in human body and on the metabolism. Sugars, and in particular simple sugars, are among the most easily digestible carbohydrates. On the other hand, proper metabolism depends on vitamins, mineral salts and other bioactive health-promoting components delivered to the body. Fruits, including apples, are the natural source of such components.

Apples comprise approximately 9-14% of carbohydrates, with simple sugars being predominant among them (primarily fructose, glucose, sucrose is also present), approximately 83% of water, also organic acids (malic, citric, quinic, succinic and other), dietary fibre, pectic substances, vitamins (including C, A, B1, B2, B3, PP) and mineral components (primarily potassium, phosphorus, calcium, sodium, magnesium, iron and other microelements), polyphenols (primarily flavonoids), small amounts of protein. Sugars and mineral components occur in forms easily digestible by the body. The fructose from apples stabilises the blood sugar level. Potassium increases muscular tension, including that of the cardiac muscle. Organic acids have a deacidifying effect on the body, lower the risk of depositing calcium oxalate residues and result in taste qualities. Dietary fibre positively affects the intestinal peristalsis and lowers the cholesterol level of blood. Pectins, which in the digestive system bind harmful compounds, act similarly. In humans, compounds from the group of polyphenols (primarily flavonoids) exhibit a strong antioxidating activity, remove from the body free radicals responsible, e.g. for the ageing of cells or the generation of cancer. Vitamins regulate all biological processes.

Thus, apples undoubtedly belong to health-promoting products. In an amount comparable to amounts used in known energy drinks, apples comprise easily digestible carbohydrates, as well as other components affecting the proper course of metabolism (which are also used in known energy drinks).

As indicated by state of the art presented above, concentrates of fruit juices are also used in energy drinks. However, it should be noted that the beneficial properties of apples involve whole fruit, and clear juice concentrates obtained from them no longer have the same features.

Clear apple juice concentrates are almost completely freed of pectins, dietary fibre, vitamin C, over 90% of polyphenolic compounds (and thus they exhibit low antioxidating activity). Clarification involves adding to the pressed juice gelatin, bentonite and silica sol, as well as separating the fluid from solids. Due to this, the juice is transparent, but it thus loses numerous valuable components. In known energy drinks, in relatively small amounts, fruit juice concentrates are added as flavouring additives.

In cases of an increased energy demand, the rate of human metabolism may be additionally stimulated. Caffeine, delivered in moderate amounts, may be a stimulant causing the acceleration of heart rate and increasing the strength of the systole, elevating the rate of metabolism, and therefore increasing the physical capacity of the body. Caffeine occurs naturally in coffee seeds, as well as in green tea leaves (in here it is called theine).

Upon the Applicant's consultations with the Food Law Centre, the product according to the invention has been described as a carbonated drink, which according to the legal regulations allows an unambiguous categorisation of this product into the group of drinks, and allows the addition of caffeine.

Fruit juices are produced with no additional artificial additives. Compounds comprising caffeine are the only stimulating additive of the drink in question.

According to the categorisation of food products, carbonating and the caffeine additive move the product according to the invention into the group of drinks.

A health-promoting fruit energy drink, saturated with carbon dioxide, obtained from whole fruit or their edible parts, with an addition of caffeine, which comprises naturally cloudy fruit juice not from concentrate (NFC), preferably made from apples, with an addition of caffeine amounting to 100-800 mg per liter of the drink, and it is saturated with carbon dioxide amounting to 1-8 grams of the gas per liter of the drink, is manufactured. The health-promoting fruit energy drink constitutes a naturally cloudy fruit juice not from concentrate (NFC) which is obtained from any bred types of fruits or mixtures thereof. It might comprise theine as natural caffeine. Apart from natural caffeine, the health-promoting fruit energy drink additionally preferably comprises taurine, amounting to 100-500 mg per liter of the drink or other licit (permitted to trading by current food law regulations) functional components, i.e. those which affect the specific, selected human body functions.

The object of the invention is a process for manufacture of the health-promoting fruit energy drink saturated with carbon dioxide, obtained from whole fruit or their edible parts, with an addition of caffeine, comprising naturally cloudy fruit juice not from concentrate (NFC), preferably made from apples, in which whole washed fruit or any edible parts thereof are pressed into the form of naturally cloudy juice not from concentrate (NFC), mixed with addition of caffeine amounting to 100-800 mg per liter of the drink, for 25-35 seconds pasteurised in the range of pasteurisation temperatures of the given juice or mixture of juices (72-89°C), subsequently cooled down to a temperature within a range of 4-10°C, saturated with carbon dioxide amounting to 1-8 grams per liter of the drink and contained in cans intended for carbonated drinks.

In the process for manufacture of the invention in order to slow down the oxidation and colour change, immediately after pressing the juice, vitamin C is added to the juice, amounting to 50 grams per each 100 liters of the pressed juice. Preferably theine is used as caffeine. Apart from caffeine, preferably taurine is additionally added, amounting to 100-500 mg per liter of the drink.

Moreover, but not pertaining to the invention, a tunnel pasteurization can be used, and then the drink after canning can be pasteurised in a special tunnel installation within a temperature range of 72-89°C. In order to obtain a new product combining all the health-promoting features of apple fruit and an energy drink, naturally cloudy juice (not clarified and not subjected to densification) obtained from whole apples (along with seed cavities and skin) has been mixed with caffeine (preferably with theine, obtained from green tea leaves) in an amount sufficient to increase the rate of metabolism (100-800 mg per liter of the drink). So obtained drink based on juice made from whole fruit is characterised by considerable sweetness and scent, as well as viscosity making an impression of a "heavy" taste. However, diluting the components of the drink with water in order to improve the taste would diminish the obtained effect of a quick increase in energy upon its consumption. Unexpectedly, it turned out that saturating such a drink with carbon dioxide amounting to 1-8 grams per liter of the drink (approx. 5.4 g) resulted in eliminating the sensation of a "heaviness" taste and balancing the sweetness of juice to be acceptable by consumers, not affecting the concentration of the components of the drink, and thus also the obtained energy effect.

### EXAMPLES

### COMPARATIVE EXAMPLE 1

A fruit drink according to the invention consists in part or entirely of naturally cloudy juice obtained from whole fruit. The drink can be supplemented with juice obtained from the edible parts of any other fruits, e.g. apples, pears, raspberries.

### COMPARATIVE EXAMPLE 2

Apart from the caffeine additive, to the drink obtained according to example 1, to the naturally cloudy fruit juices made from apples or other fruits, may be supplemented with other functional components, i.e. those which affect the specific, selected body functions.

### COMPARATIVE EXAMPLE 3

The drink according to Example 2 comprises a taurine additive (amounting to 100-500 mg per liter of the drink). Taurine serves the function of a neurotransmitter and supports concentration of the mind for people with increased demand for energy consumed by the brain (e.g. during studying).

The invention is the process for manufacture of a health-promoting fruit energy drink based on naturally cloudy fruit juices (preferably made from apples). Whole washed fruit or any edible parts thereof are pressed into the form of naturally cloudy juice, mixed with addition of caffeine (preferably theine) amounting to 100-800 mg per liter of the drink, for 25-35 seconds pasteurised in a temperature range of 72-89°C, cooled down to temperatures within a range of 4-10°C, saturated with gaseous carbon dioxide amounting to 1-8 grams of the gas per liter of the drink and contained in cans intended for carbonated drinks.

Not pertaining to the invention is the following:
Due to the various known methods of pasteurisation used in canning plants, it is also possible to use tunnel pasteurisation performed directly after canning the drink in cans. Tunnel pasteurisation is performed in a multi-zone device in the form of a tunnel. In each of the zones, the process of heating, actual pasteurisation and cooling down of the product takes place. The product is heated gradually to the temperature of actual pasteurisation (72-89°C) and is kept in this temperature for from 5 to 9 minutes. After pasteurisation, the product is cooled down to ambient temperature.

### EXAMPLE 4

5 l of naturally cloudy juice were obtained from 8 kg of washed whole apples (along with the seed coat and skin) of the "Ligol" type. 1.5 g of pure caffeine (theine from green tea leaves) were added and mixed thoroughly. Short pasteurisation was performed for 30 seconds in a temperature of 80°C, cooling down to a temperature of 6°C, saturating with carbon dioxide using 5 l of the gas and canning in 20 cans for carbonated drinks, 250 ml in volume.

The energy value of a can of the drink amounted to 870 kJ (208 kcal). The flavour of the drink was pleasant sweet-and-sour, with the characteristic bubbles of a carbonated drink.

### EXAMPLE 5

5 l of naturally cloudy juice were obtained from 8 kg of washed whole apples (along with the seed coat and skin) of the "Champion" type. 1.5 g of pure caffeine (theine from green tea leaves) were added to the juice and mixed thoroughly. Subsequently, short pasteurisation was performed in a temperature of 80°C for 30 seconds. The drink was cooled down to a temperature of 6°C and saturated with carbon dioxide using 5 l of gaseous carbon dioxide. The drink was canned in 20 cans for carbonated drinks, 250 ml in volume.

The energy value of a can of the drink amounted to 870 kJ (208 kcal). The flavour of the drink was pleasant sweet-and-sour, with the characteristic bubbles of gaseous CO₂.

### COMPARATIVE EXAMPLE 6

5 l of naturally cloudy juice were obtained from 5 kg of washed whole apples (along with the seed coat and skin) of the "Champion" type and 3 kg of pears of the Klapsa type. 1.5 g of pure caffeine (theine from green tea leaves), 1.5 g of taurine were added and mixed thoroughly. The drink was cooled down to a temperature of 6°C, saturated with carbon dioxide using 5 l of the gas, and canned in 20 cans for carbonated drinks, 250 ml in volume. Subsequently, tunnel pasteurisation was conducted and the cans were cooled down to ambient temperature.

The energy value of a can of the drink amounted to 870 kJ (208 kcal). The flavour of the drink was pleasant sweet-and-sour, with the characteristic bubbles of a carbonated drink. A new type of energy drinks was obtained, which apart from the stimulating effect have all the health-promoting properties of fruit, of which energy drinks manufactured in a process according to the invention have been produced. The technology of production for energy drinks has been simplified by eliminating the necessity of a quantitative and qualitative precise selection of a considerable amount of individual components (carbohydrates, vitamins, mineral salts, flavours, organic acids, etc.) except caffeine, based on natural easily digestible components of fruit, in their natural proportions.

A carbonated fruit energy drink with particular taste qualities has been obtained.

## Claims

1. A process for manufacture of health-promoting fruit energy drink, saturated with carbon dioxide, obtained from whole fruit or their edible parts, with an addition of caffeine comprising naturally cloudy fruit juice not from concentrate (NFC), preferably made from apples, **characterised in that** whole washed fruit or any edible parts thereof are pressed into the form of naturally cloudy juice, mixed with addition of caffeine amounting to 100-800 mg per liter of the drink, for 25-35 seconds pasteurised in the range of pasteurisation temperatures of the given juice or mixture of juices (72-89°C), subsequently cooled down to a temperature within a range of 4-10°C, saturated with carbon dioxide amounting to 1-8 grams per liter of the drink and contained in cans intended for carbonated drinks.

2. The process for manufacture according to claim 1, **characterised in that,** in order to slow down the oxidation and colour change, immediately after pressing the juice, vitamin C is added to the juice, amounting to 50 grams per each 100 liters of the pressed juice.

3. The process for manufacture according to claim 1, **characterised in that** theine is used as caffeine.

4. The process for manufacture according to claim 1, **characterised in that** apart from caffeine, taurine is additionally added, amounting to 100-500 mg per liter of the drink.

## Patentansprüche

1. Verfahren zur Herstellung eines gesundheitsfördernden, mit Kohlendioxid gesättigten Fruchtenergiegetränks aus ganzen Früchten oder deren essbaren Teilen, mit einem Zusatz von Koffein, enthaltend naturtrüben Fruchtsaft nicht aus Konzentrat (NFC), vorzugsweise aus Äpfeln gemacht, **dadurch gekennzeichnet, dass** ganze gewaschene Früchte oder beliebige essbare Teile davon in die Form eines naturtrüben Saftes gepresst, mit dem Zusatz von Koffein in der Menge von 100-800 mg pro Liter des Getränks gemischt, 25-35 Sekunden lang im Bereich der Pasteurisierungstemperaturen des gegebenen Saftes oder der Saftmischung (72-89°C) pasteurisiert, anschließend auf eine Temperatur im Bereich von 4-10°C abgekühlt, mit Kohlendioxid in der Menge von 1-8 Gramm pro Liter des Getränks gesättigt und in für kohlensäurehaltige Getränke vorgesehenen Dosen gefüllt werden.

2. Verfahren zur Herstellung nach Anspruch 1, **dadurch gekennzeichnet, dass,** um die Oxidation und den Farbwechsel zu verlangsamen, wird dem Saft unmittelbar nach dem Saftpressen Vitamin C in der Menge von 50 Gramm pro 100 Liter des gepressten Saftes zugesetzt.

3. Verfahren zur Herstellung nach Anspruch 1, **dadurch gekennzeichnet, dass** als Koffein Thein verwendet wird.

4. Verfahren zur Herstellung nach Anspruch 1, **dadurch gekennzeichnet, dass** außer Koffein, zusätzlich Taurin in der Menge von 100-500 mg pro Liter des Getränks zugesetzt wird.

## Revendications

1. Procédé de fabrication d'une boisson énergisante aux fruits favorable à la santé, saturée en dioxyde de carbone, obtenue à partir de fruits entiers ou de leurs parties comestibles, avec une addition de caféine comprenant du jus de fruit naturellement trouble non issu de concentré (NFC), de préférence fabriqué à partir de pommes, **caractérisé en ce que** des fruits lavés entiers ou toutes parties comestibles de ceux-ci sont pressés sous la forme de jus naturellement trouble, mélangés avec l'addition de caféine à raison de 100-800 mg par litre de la boisson, pasteurisés pendant 25-35 secondes dans la gamme de températures de pasteurisation du jus donné ou du mélange de jus (72-89°C), refroidis ensuite à une température dans la gamme de 4-10°C, saturés en dioxyde de carbone à raison de 1-8 grammes par litre de la boisson et contenus dans des boîtes destinées aux boissons gazeuses.

2. Procédé de fabrication selon la revendication 1, **caractérisé en ce que,** pour ralentir l'oxydation et le changement de couleur, immédiatement après le pressage du jus, de la vitamine C est ajoutée au jus, à raison de 50 grammes par chaque 100 litres du jus pressé.

3. Procédé de fabrication selon la revendication 1, **caractérisé en ce que** la théine est utilisée comme caféine.

4. Procédé de fabrication selon la revendication 1, **caractérisé en ce que,** en plus de la caféine, de la taurine est également ajoutée, à raison de 100-500 mg par litre de boisson.
